# FASCICULE DE BREVET EUROPEEN

(11) **EP 0 701 188 B1**
(45) Date de publication et mention de la délivrance du brevet: **29.11.2000**
(21) Numéro de dépôt: 95401973.3
(22) Date de dépôt: 30.08.1995
(51) Int. Cl.: G05D 16/02, G05D 16/10

(54) **Détendeur perfectionné pour un fluide sous pression**
Verbesserter Druckminderer für ein unter Druck stehendes Fluid
Improved expansion valve for a pressurized fluid

(30) Priorité: 06.09.1994 FR 9410658
(43) Date de publication de la demande: 13.03.1996
(73) Titulaire: TAEMA, F-92182 Antony Cédex (FR)
(72) Inventeur: Theurant, Gilbert, F-94400 Vitry sur Seine (FR)
(74) Mandataire: Le Moenner, Gabriel

(56) Documents cités:
- EP-A- 0 458 253
- DE-B- 1 210 596
- FR-A- 471 293
- FR-A- 994 591
- FR-A- 2 678 702
- GB-A- 2 071 817
- US-A- 2 043 944
- US-A- 3 576 194
- US-A- 3 911 948

## Description

L'invention concerne un détendeur pour un fluide sous pression, en particulier de gaz sous haute pression, du type comprenant, dans un corps, une chambre de détente communiquant avec un canal d'admission par un orifice formé par perçage axial dans un siège de clapet sélectivement obturable par un moyen de clapet déplaçable vers et à l'écart de l'orifice par un élément de commande sensible à la pression, et des moyens pour raccorder une source de fluide sous pression au canal d'admission.

Lorsqu'un détendeur de ce type est mis sous pression, le moyen de clapet est exposé directement aux effets de la compression du fluide : la compression brutale du fluide produit un véritable coup de bélier qui libère une énergie thermique très importante. Cette énergie est absorbée essentiellement par le clapet de régulation, ce qui peut l'endommager gravement ou même le détruire complètement par son inflammation.

La présente invention a pour objet de proposer un nouvel agencement de détendeur de faibles coûts de fabrication et d'entretien permettant de remédier à cet inconvénient.

Pour ce faire, selon un aspect de l'invention, le canal d'admission comporte au moins une portion de circuit formée dans le corps et constituant une chicane obligeant le fluide sous pression à changer au moins deux fois de direction avant d'atteindre le moyen de clapet cette chicane comportant au moins une première portion de circuit axiale raccordée à une première portion de circuit transversale et à un alésage d'entrée et au moins une deuxième portion de circuit axiale débouchant dans ledit orifice.

Avec un tel agencement, la plus grande partie du dégagement de chaleur qui résulte de la compression du gaz et du choc de particules, telles que des poussières, qui peuvent être présentes dans le fluide, est absorbée par la chicane du canal d'admission. Etant donné que le corps est généralement réalisé en un métal qui supporte beaucoup mieux cet apport brutal de chaleur que le clapet, il n'en résulte aucun inconvénient pour le corps, ni pour le fonctionnement du détendeur.

Selon un mode particulier de réalisation, le canal d'admission comporte plusieurs chicanes successives.

D'autres caractéristiques et les avantages de la présente invention ressortiront de la description suivante d'un mode de réalisation donné à titre illustratif mais nullement limitatif, faite en relation avec les dessins annexés, sur lesquels :

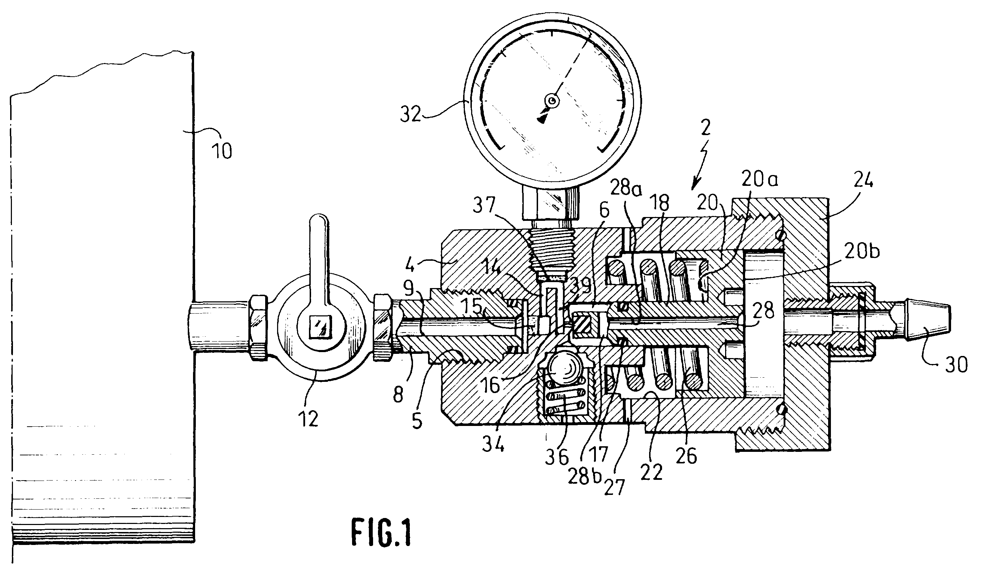

- la figure 1 représente une vue en coupe longitudinale d'un mode de réalisation d'un détendeur selon l'invention; et
- la figure 2 une vue en coupe à plus grande échelle du corps du détendeur de la figure 1.

Un détendeur de l'invention, désigné par la référence générale 2, comporte un corps tubulaire massif 4 réalisé typiquement en un métal tel que le laiton ou un acier inoxydable. Une chambre de détente 6 est formée centralement dans le corps 4. A l'extrémité gauche du corps, en regardant les figures, on a prévu un alésage taraudé d'entrée 5 qui permet de raccorder au corps 4 une canalisation 8 de fluide sous pression comportant un canal interne 9.

Dans l'exemple de réalisation représenté, la canalisation 8 est reliée à un réservoir ou une bouteille 10, contenant un gaz, par exemple de l'oxygène sous une pression élevée, par exemple de 240 x 10⁵ Pa environ. Un robinet 12, ou une vanne d'arrêt est placé(e) sur la canalisation 8 entre le détendeur 2 et le réservoir.

Le gaz sous pression est acheminé dans la chambre de détente 6 par l'intermédiaire d'un canal d'admission 14 taillé dans le corps 4. Un premier filtre 15 est avantageusement monté à l'entrée du canal 14 pour retenir les particules éventuellement en suspension dans le gaz du réservoir 10.

Un manomètre 32 est monté dans un alésage taraudé latéral 35 formé dans le corps 4 et communiquant avec le canal d'admission 14 du fluide sous haute pression. Ainsi, le manomètre 32 permet de mesurer la pression du fluide avant la détente et, indirectement, d'apprécier le taux de remplissage du réservoir.

L'extrémité aval du canal d'admission 14 débouche dans la chambre de détente 6 par un orifice d'admission dans le siège 7 d'un clapet 16. Le clapet 16 est supporté par une tige 18 qui coulisse dans la chambre de détente 6. Un joint torique d'étanchéité 17 monté à la périphérie de la tige 18 assure une étanchéité dynamique entre la paroi interne de la chambre et la paroi externe de la tige 18. Cette tige 18 est solidaire d'un piston 20 qui est monté coulissant dans un alésage 22 pratiqué dans l'extrémité droite du corps 4. Un couvercle 24, vissé sur le corps 4, ferme le volume délimité par l'alésage 22.

La face 20a du piston 20 adjacente à la tige 18 est soumise à l'action d'un ressort hélicoïdal de compression 26 monté coaxialement à la tige 18 et prenant appui sur le corps 4. Le ressort 26 tend à éloigner l'ensemble formé par le piston 20, la tige 18 et le clapet 16 de l'orifice d'admission du fluide sous pression. Le volume interne délimité par l'alésage 22 du corps 4 et la face 20a du piston est mis en communication avec l'atmosphère par des passages latéraux 27 qui traversent la paroi du corps 4.

La tige 18 comporte d'autre part un canal longitudinal 28 qui met en communication la chambre de détente 6 et la chambre délimitée dans le corps 2 entre le couvercle 24 et la seconde face 20b du piston. Le canal longitudinal 18 comprend un canal axial 28a débouchant dans un trou transversal 28 traversant diamétralement la tige 18 au voisinage du clapet 16.

Un embout de sortie 30 est raccordé au couvercle 24. L'embout 30 permet la fourniture de gaz détendu à une pression convenable, par exemple 3 ou 4 x 10⁵ Pa, à une ligne d'utilisation. Une soupape de sécurité est prévue dans le corps 4, constituée par une bille 34 appliquée sur un siège communiquant avec la chambre 6 par un ressort hélicoïdal 36 dont l'effort est réglable. Dans l'exemple représenté, cette soupape de sécurité permet de mettre la chambre de détente 6 en communication avec l'atmosphère, par exemple dans le cas où le clapet 16 serait détérioré.

Dans les détendeurs connus, le canal d'admission 14 du fluide sous pression en amont du clapet 16 est rectiligne. Par suite, lorsque l'on ouvre le robinet 12, le gaz sous pression dans le réservoir 10 exerce dans le canal 14 un véritable coup de bélier qui est encaissé directement par le clapet 16. La compression adiabatique du gaz produit une très importante libération d'énergie qui peut porter le clapet à une température atteignant 1000°C. Or, ce clapet est réalisé en un matériau fragile, généralement au moins partiellement en matière plastique, incapable de résister à une très forte élévation de sa température.

Par ailleurs, le document EP-A-0 458 253 décrit une vanne manuelle fixée à un réservoir contenant un fluide sous pression et munie d'un dispositif pour maintenir une pression résiduelle dans le réservoir. Cette vanne comporte un canal d'admission ayant une extrémité connectable au réservoir et une extrémité débouchant via un orifice formé par perçage axial dans un siège de clapet dans une chambre communiquant avec un circuit de sortie, l'orifice étant sélectivement obturable par un clapet déplaçable vers et à l'écart de l'orifice par un élément de commande manuelle. Dans cette vanne le canal d'admission comporte une portion de circuit obligeant le fluide à changer plusieurs fois de direction avant d'arriver sur le clapet. Le canal d'admission comporte notamment une première et une deuxième portions axiales alignées et une cavité, constituant le logement pour le dispositif de maintien de pression résiduelle et reliant ces deux portions axiales. Dans cette vanne le fluide rencontre cependant un clapet après avoir changé une seule fois de direction.

Selon l'invention, par contre, le canal 14 d'admission du fluide sous pression comporte au moins une chicane qui oblige le fluide à changer au moins deux fois de direction, en l'occurrence quatre, avant d'atteindre le clapet 16.

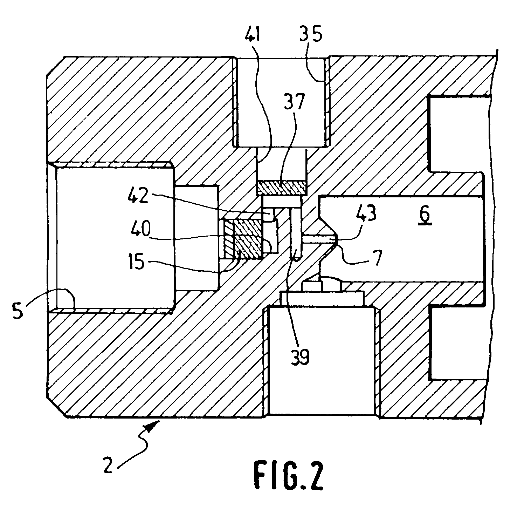

En effet, comme on le voit mieux sur la figure 2, l'alésage taraudé d'entrée 5 se prolonge par un alésage axial borgne de diamètre réduit 40, dans lequel est disposé le filtre d'entrée 15 typiquement réalisé en bronze fritté. De façon similaire, l'alésage taraudé latéral 35, servant au montage du manomètre 32, est prolongé radialement vers l'intérieur du corps par un alésage borgne étagé 41 de diamètre réduit dans lequel est monté le filtre 37, également réalisé typiquement en bronze fritté. Un perçage transversal 42 établit la communication entre le fond des alésages 40 et 41 et un perçage borgne transversal 39, parallèle au perçage 42, établit une communication entre le fond de l'alésage 41 et un perçage axial 43 débouchant dans le siège 7 et formant l'extrémité aval du canal d'admission 14. Typiquement, pour un perçage 43 ayant un diamètre de 0,8 mm, les perçages transversaux 39 et 42 ont un diamètre de 1,2 mm et la chambre de stabilisation au fond de l'alésage 41, un diamètre d'environ 4 mm analogue à celui de l'alésage axial 40.

On comprendra qu'avec un tel agencement, le gaz sous pression pénétrant dans le canal d'admission 14 vient buter, après avoir franchi le filtre d'entrée 15, sur le fond de l'alésage 40 et doit emprunter un trajet orthogonal au précédent via le perçage de passage réduit 42, pour se détendre et se répandre dans l'alésage 41 en traversant le filtre aval 37, repasser ce dernier pour emprunter le passage transversal 39 et s'échapper, en revenant dans une orientation axiale, par le perçage 43 pour atteindre le clapet 16 en ayant, entre-temps, perdu l'essentiel de son énergie cinétique, l'énergie calorifique libérée par la compression adiabatique du gaz étant transmise à la masse métallique du corps 2 le long du trajet du canal d'admission 14 et les variations de température du front de l'onde gazeuse homogénéisées et affaiblies par le filtre aval 37 qui atténue également les battements de pression dans le canal 14. La masse métallique du corps 2 supporte sans encombre des élévations locales de température élevées et les répartit par conduction en éliminant ainsi les points chauds. Les multiples changements de direction de la chicane ont également pour effet de casser l'énergie cinétique des particules qui auraient franchi le filtre d'entrée 15 et de retenir nombre de celles-ci dans le filtre 37 ou la chambre 41.

Quoique la présente invention ait été décrite en relation avec un mode de réalisation particulier, elle ne s'en trouve pas limitée pour autant mais est au contraire susceptible de modifications et de variantes qui apparaîtront à l'homme du métier dans le cadre des revendications ci-après.

## Revendications

1. Détendeur pour un fluide sous pression, comprenant, dans un corps, (4), un canal d'admission (14) ayant une extrémité amont (5) connectable à une source de fluide sous pression (10) et une extrémité aval débouchant, via un orifice (43) formé par perçage axial dans un siège de clapet (7), dans une chambre de détente (6) communiquant avec un circuit de sortie (28,30), l'orifice étant sélectivement obturable par un clapet (16) déplaçable dans la chambre de détente (6) vers et à l'écart de l'orifice par un élément de commande sensible à la pression (20), caractérisé en ce que le canal d'admission (14) comporte au moins une portion de circuit (39, 40, 42, 43), taillée dans le corps (4) constituant une chicane obligeant le fluide sous pression à changer au moins deux fois de direction avant d'atteindre le clapet (16) cette chicane comportant au moins une première portion de circuit axiale (40) raccordée à une première portion de circuit transversale (42) et à un alésage d'entrée (5) et au moins une deuxième portion de circuit axiale (43) débouchant dans ledit orifice.

2. Détendeur selon la revendication 1, caractérisé en ce que le clapet est réalisé au moins partiellement en matériau plastique.

3. Détendeur selon l'une des revendications précédentes, caractérisé en ce que la chicane comporte une deuxième portion de circuit transversale (39) et en ce que la chambre de détente (6) est formée dans le corps.

4. Détendeur selon la revendication 4, caractérisé en ce qu'il comporte une cavité (41) formée dans le corps (4) reliant les première (42) et deuxième (39) portions de circuit transversales.

5. Détendeur selon la revendication 5, caractérisé en ce qu'il comporte un filtre (37) disposé dans la cavité (41).

6. Détendeur selon la revendication 6, caractérisé en ce qu'il comporte un manomètre (32) raccordé à la cavité (41).

7. Détendeur selon l'une des revendications 3 à 7, caractérisé en ce que la première portion de circuit transversale (42) a une section inférieure à celle de la première portion de circuit axiale (41).

8. Détendeur selon l'une des revendications 4 à 8, caractérisé en ce que les première (42) et deuxième (43) portions de circuit axiales sont alignées.

## Patentansprüche

1. Druckminderer für ein unter Druck stehendes Fluid, der in einem Körper (4) einen Einlaßkanal (14) enthält, der ein mit einer Druckfluidquelle (10) verbindbares, stromaufwärts gelegenes Ende (5) und ein stromabwärts gelegenes Ende aufweist, das über eine durch eine Axialbohrung in einem Ventilsitz (7) gebildete Öffnung (43) in eine mit einem Ausgangskreis (28, 30) verbundene Entspannungskammer (6) mündet, wobei die Öffnung durch ein in der Entspannungskammer (6) mittels eines druckempfindlichen Steuerelements (20) zur Öffnung hin und davon weg verschiebbaren Ventils (16) gezielt verschließbar ist, dadurch gekennzeichnet, daß der Einlaßkanal (14) mindestens einen in den Körper (4) geschnittenen Kreisteil (39, 40, 42, 43) aufweist, der ein Hindernis bildet, das das unter Druck stehende Fluid dazu zwingt, mindestens zweimal die Richtung zu wechseln, bevor es das Ventil (16) erreicht, wobei dieses Hindernis mindestens einen ersten Axialteil (40) des Kreises, der mit einem ersten Querteil (42) des Kreises und mit einer Eintrittsbohrung (5) verbunden ist, und mindestens einen in die Öffnung mündenden zweiten Axialteil (43) des Kreises umfaßt.

2. Druckminderer nach Anspruch 1, dadurch gekennzeichnet, daß das Ventil zumindest teilweise aus Kunststoff hergestellt ist.

3. Druckminderer nach einem der vorhergehenden Ansprüche, dadurch gekennzeichnet, daß das Hindernis einen zweiten Querteil (39) des Kreises aufweist und daß die Entspannungskammer (6) in dem Körper ausgebildet ist.

4. Druckminderer nach Anspruch 3, dadurch gekennzeichnet, daß er einen in dem Körper (4) ausgebildeten Hohlraum (41) aufweist, der den ersten (42) und zweiten (39) Querteil des Kreises verbindet.

5. Druckminderer nach Anspruch 4, dadurch gekennzeichnet, daß er ein in dem Hohlraum (41) angeordnetes Filter enthält.

6. Druckminderer nach Anspruch 5, dadurch gekennzeichnet, daß er ein mit dem Hohlraum (41) verbundenes Manometer (32) enthält.

7. Druckminderer nach einem der Ansprüche 3 bis 6, dadurch gekennzeichnet, daß der erste in Querteil (42) des Kreises einen kleineren Querschnitt hat als der erste Axialteil (41) des Kreises.

8. Druckminderer nach einem der Ansprüche 4 bis 7, dadurch gekennzeichnet, daß der erste (42) und der zweite (43) Axialteil aufeinander ausgerichtet sind.

## Claims

1. Expansion valve for a pressurized fluid, comprising, in a body (4), an inlet duct (14) with an upstream end (5) connectable to a source (10) of pressurized fluid and a downstream end opening, via an orifice (43) formed by an axial drilling in a valve seat (7), into an expansion chamber (6) communicating with an outlet circuit (28, 30), the orifice being selectively closable by a valve element (16) that can be moved in the expansion chamber (6) towards and away from the orifice by a pressure-sensitive control element (20), characterized in that the inlet duct (14) comprises at least one circuit portion (39, 40, 42, 43) cut in the body (4) constituting a chicane forcing the pressurized fluid to change direction at least twice before reaching the valve element (16), this chicane having at least a first axial circuit portion (40) connected to a first transverse circuit portion (42) and to an inlet bore (5), and at least a second axial circuit portion (43) opening into the said orifice.

2. Expansion valve according to Claim 1, characterized in that the valve element is at least partially made of plastic.

3. Expansion valve according to one of the preceding claims, characterized in that the chicane comprises a second transverse circuit portion (39) and in that the expansion chamber (6) is formed in the body.

4. Expansion valve according to Claim 4, characterized in that it comprises a cavity (41) formed in the body (4) connecting the first (42) and second (39) transverse circuit portions.

5. Expansion valve according to Claim 5, characterized in that it comprises a filter (37) arranged in the cavity (41).

6. Expansion valve according to Claim 6, characterized in that it comprises a pressure gauge (32) connected to the cavity (41).

7. Expansion valve according to one of Claims 3 to 7, characterized in that the first transverse circuit portion (42) has a smaller cross section than the first axial circuit portion (40).

8. Expansion valve according to one of Claims 4 to 8, characterized in that the first (42) and second (43) axial circuit portions are aligned.
